(19) Europäisches Patentamt
European Patent Office
Office européen des brevets

(11) EP 3 825 793 A1

(12) EUROPEAN PATENT APPLICATION

(43) Date of publication:
26.05.2021 Bulletin 2021/21

(51) Int Cl.:
G05B 19/042 (2006.01)     G05B 19/418 (2006.01)
G06Q 50/06 (2012.01)

(21) Application number: 20020528.4

(22) Date of filing: 12.11.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
KH MA MD TN

(30) Priority: 19.11.2019 EP 19020656

(71) Applicant: Linde GmbH
82049 Pullach (DE)

(72) Inventor: Gaurav, Padgilwar
80687 München (DE)

(74) Representative: Imhof, Dietmar
Linde GmbH
Intellectual Property EMEA
Dr.-Carl-von-Linde-Straße 6-14
82049 Pullach (DE)

(54) **MACHINE MODULE FOR ONLINE EFFICIENCY ESTIMATION AND PERFORMANCE MONITORING INTEGRATED WITH LASS CONTROLLER AND METHOD FOR OPERATING AT LEAST ONE MACHINE OF A PROCESS ENGINEERING PLANT**

(57) The present invention relates to a method for operating at least one machine of a process engineering plant, wherein current data characterising the at least one machine is determined, wherein the current data is evaluated, and wherein the at least one machine is operated in dependence of the evaluated current data.

Fig. 8

**Description**

The present invention relates to a method for operating at least one machine of a process engineering plant and a computing unit for performing this method.

Background of the Invention

Process engineering (also called chemical engineering) plants are usually understood to be plants for carrying out substance modifications and substance conversions with the aid of purposeful physical and/or chemical and/or biological and/or nuclear effects. Such modifications and conversions typically comprise crushing, sieving, mixing, heat transferring, cohobating, crystallizing, drying, cooling, filling, and superimposed substance transformations, such as chemical, biological or nuclear reactions.

A process engineering plant can comprise several different components such as different heat exchangers, e.g. plate-fin heat exchangers (PFHE) or coil-wound heat exchangers (CWHE), columns, e.g. distillation or adsorption or wash columns, machines like compressors, boosters, turbines, pumps, cold boxes, etc. For example, process engineering plants can be plants for producing specific gases like air separation units, natural gas plants, ethylene plants, hydrogen plants, adsorption plant, etc.

Power consumption of a process engineering plant particularly depends on the efficiencies and performances of the various components. Usually process engineering plants are operated with different scenarios and product combinations which often depend on customer demands. Operating scenarios of that kind may not always yield the best possible operation of the process engineering plant in terms of power consumption. However, it is desirable to optimise the power consumption of the plant, since even one percent improvement in plant efficiency can save up to hundred kilowatts of power.

Disclosure of the invention

According to the invention, a method for operating at least one machine of a process engineering plant and a computing unit for performing this method with the features of the independent claims are proposed. Advantageous further developments form the subject matter of the dependent claims and of the subsequent description.

The process engineering plant can e.g. be an air separation unit and/or a natural gas plant and/or an ethylene plant and/or a hydrogen plant and/or an adsorption plant. The process engineering plant comprises at least one machine. The machine can e.g. be a compressor and/or a turbine and/or a booster and/or a pump.

Plant power consumption of process engineering plants like air separation plants strongly depend on the efficiencies of the machines such as compressors and booster turbines. The plant is often operated with different scenarios and product combinations such as less liquid more gas or in turndown scenarios, which often depend upon customer requirements. This gives rise to different production scenarios and different input airflows and pressures of main air compressors, booster air compressors and different operating conditions for turbine boosters, which can be chosen either based on existing process calculations, short cut calculation methods or operator experience. This may not always be the best point of operation in terms of power consumption. There is always a possibility for energy optimisation of the plant, since even one percent improvement in plant efficiency can save hundred kilowatts of power. The present invention provides a possibility to improve the efficiency of machines of process engineering plants and thus to improve the efficiency of the entire plant.

Compressor power can deviate from guaranteed power from a machine vendor thereby affecting the total plant performance. The present invention provides an efficiency calculator, which can provide clarity for such deviations. Further, the present invention provides efficiency estimation on stream, which can be helpful to track the performance of the machines at different points of time and to compare the deviations in power. Compressor efficiency is an important parameter which can be made available by the present invention for any compressor at any point of time of operation.

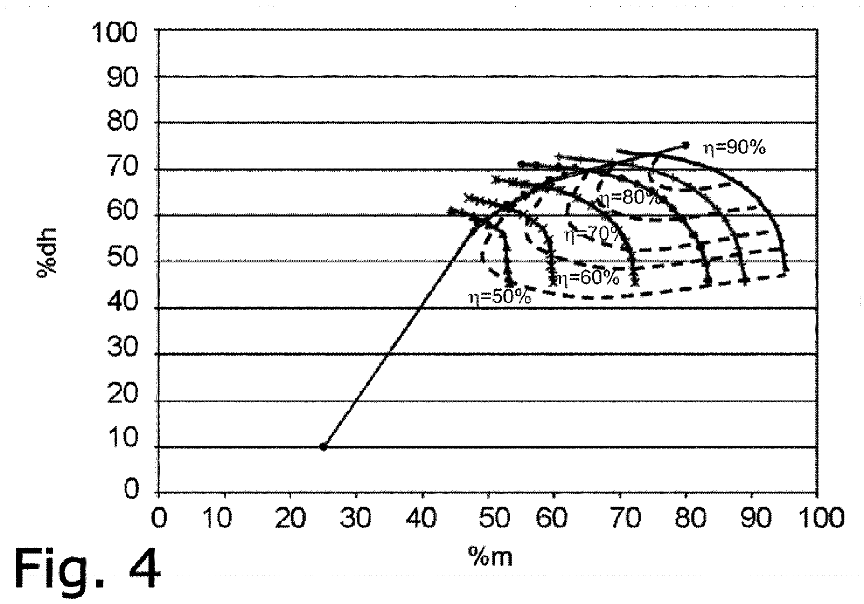

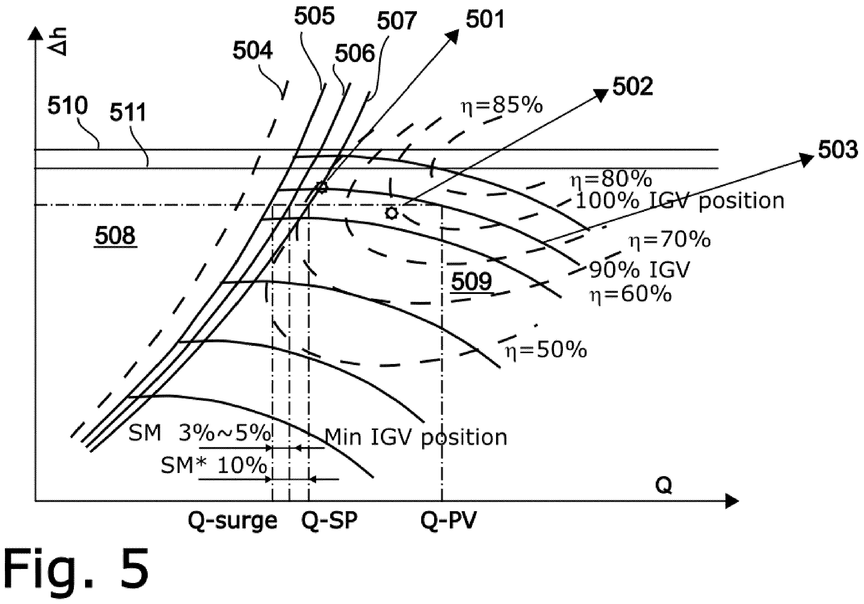

The present invention provides a tool or program, which helps to estimate the stream efficiency of machines such as main air compressors, booster air compressors, or booster turbines and calculate the operating power, which can further be improved by selecting the best operating efficiency from efficiency curves either manually or through a controller as shown in Figs. 4, 5, 6, and 7.

Machine efficiency estimation calculations can be performed for different scenarios and power requirements for different production cases can be compared. Also Performance deviations can be observed. For example, for the same operation case it can be observed why power requirements are different and how much the efficiency deviates from one day to another or why spec power for production of gases are different.

The present efficiency and performance estimation tool for machines can be used to monitor the machine performance during the lifetime of the plant using machine rating data stored in a cloud, which provides further insights for aftersales service as well as for performance reduction over a period of time, which can further be used to compare performance of machines from different manufacturers.

Performance rating of compressors and booster turbines can be done on stream bringing clarity about the power consumption of the plant. Often in turndown cases the machine efficiencies can decrease drastically. Therefore, an efficiency calculator can be very helpful for estimating and improving the machine performance.

The present tool or program can be programmed using DCS systems or SCL (Structured Control Language) and can be incorporated into existing tools such as anti surge control systems (LASS) which control the anti-surge valve opening of compressors. It is also possible that the tool or program can be programmed separately as a module into a DCS system using controller data for the calculation of compressor and turbine booster efficiencies on stream and for the calculation of the power consumption of the plant. Process parameters can be changed either manually or through controllers to operate the plant at best possible efficiency.

A LASS controller gives an idea about the compressor operation line which is operated with 5-10% margin from the surge line and in this operating zone the machine is operated and the efficiency of the machines, power, compressor curves and other parameters can be calculated with the help of the efficiency calculator and the machine module. Input values such as pressure, flow, inlet temperatures of air, inlet orifice dp for flow estimations, surge lines of all machines and rotational speed of the turbines are derived from the DCS system to calculate the efficiencies of each machine separately. Thereby the total power requirement of the plant is determined on stream. This tool also uses information such as compressor digitalised performance curves of compressors for various ambient conditions, digitalised booster turbine performance curves, and specific speeds and other data from machine manufacturers for the calculation of machine efficiencies on stream.

Deviations of actual power consumption from a theoretical power consumption can be monitored. These monitored deviations can be used to improve the machine efficiencies by changing operating conditions for improved performance of the plant. This adjustment in plant performance can be done with the help of constant efficiency lines, wherein possible efficiency improvements can be monitored.

The efficiency estimator incorporated in a LASS controller for compressors and booster turbines can be sold as after sales product.

On the other hand, separate machine modules can be programmed as "Smile python" modules for compressors and booster turbines which uses data from an LASS controller and/or an antisurge controller on DCS for calculating stable operating regions. Power can be optimised within this region using best possible efficiency and minor adjust in production figures.

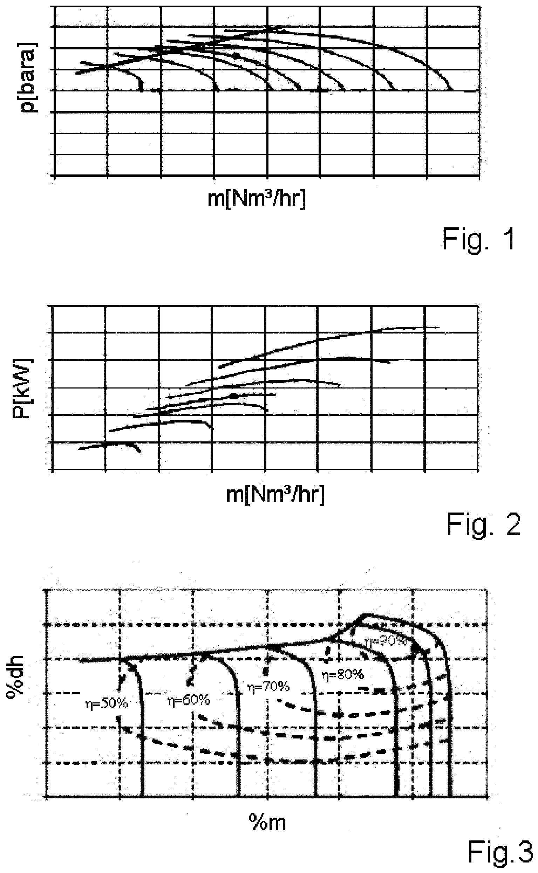

Once the online efficiency of all machines is estimated on stream, as shown in Figs. 3, 4, 5, 6, and 7, further an overall power optimisation of the plant can be done with help of simulator tools like "Optisim" or a separate program, which uses functionality of "Optisim" and helps to optimise the plant performance based on real time efficiencies of the machines. Efficiencies can also be estimated inside the LASS Controller or in a machine module programmed as "Smile Python" module which uses data from the LASS controller and has the functionality of "Optisim". Power can be estimated in this "Smile Python" module and the "Smile" optimiser module can calculate optimised power by adjusting the operating point of machines where best possible machine efficiencies can be achieved. Machine modules can also be programmed as an excel tool which uses data from plant automation software or from DCS.

Plant power deviations can be studied at different points of operation and better production decisions can be taken based on optimised power. Machine rating can be done during lifetime, a decrease in performance of the machines can be observed over a period of lifetime and this information can be used for vendor selection as well as for aftersales services. This approach can be further implemented for cryogenic liquid pumps.

The present invention can particularly advantageously be used for the online plant optimiser and the operation of a process engineering plant according to the method, which it is disclosed in the not yet published patent application "Online plant optimizer for operating, performance rating, energy and cost optimization and design of a process plant and integration with a smart plant three-dimensional piping model to create high performing plant digital twin" no. 19020654.0 of the applicant filed on the same day as the present patent application. For a detailed description of this method of operating a process engineering plant, it is referred to said application 19020654.0 to its full content. The disclosure of said application 19020654.0 shall further be fully incorporated as content of the present patent application. Advantageously, the so called machine module as it is disclosed in the application 19020654.0 is implemented by performing a preferred embodiment of the present method for operating at least one machine such as compressor, booster turbine and/or turbine alone of a process engineering plant.

A machine module for estimating compressor, booster turbine efficiencies, power consumption, other critical process parameters can also be incorporated in a "Smile" module as disclosed in in the application 19020654.0 and/or as an Excel tool connected with DCS data.

According to the present method, an operating point controller is also proposed which can automatically give set points to compressor and booster turbines to operate them at best possible efficiencies once the optimised operating point is selected manually or using plant automation software (Like APCS, Aveva Sim central or Aspen) equipped with an online plant optimiser as disclosed in the application 19020654.0.

A computing unit according to the invention is, in particular programmatically, configured to carry out an inventive method, i.e. comprises all means for carrying out the invention.

Further aspects of the invention are a computer program with program code means for causing a computing unit to perform a method according to the invention, and a computer readable data carrier having stored thereon such a computer program and/or a cloud data application. This allows for particularly low costs, especially when a performing computing unit is still used for other tasks and therefore is present anyway. Suitable media for providing the computer program are particularly floppy disks, hard disks, flash memory, EEPROMs, CD-ROMs, DVDs etc. A download of a program on computer networks (Internet, Intranet, Cloud applications, etc.) is possible.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings

Fig. 1     schematically shows a flow vs. discharge pressure of a compressor diagram, which can be determined in the course of a preferred embodiment of a method according to the present invention,

Fig. 2     schematically shows a flow vs. power diagram of a compressor, which can be determined in the course of a preferred embodiment of a method according to the present invention,

Fig. 3     schematically shows a percentage flow vs. percentage head diagram with constant efficiency lines, which can be determined in the course of a preferred embodiment of a method according to the present invention,

Fig. 4     schematically shows a percentage flow vs. percentage head diagram as an output for a LASS controller or machine module, which can be determined in the course of a preferred embodiment of a method according to the present invention,

Fig. 5     schematically shows a diagram of the differential head of compressors $\Delta h$ vs. the flow Q of the compressors, which can be determined in the course of a preferred embodiment of a method according to the present invention,

Fig. 6     schematically show diagrams for online monitoring of turbine and booster operating points and current efficiencies, which can be determined in the course of a preferred embodiment of a method according to the present invention,

Fig. 7     schematically shows a diagram of an isentropic head vs. a booster flow of a booster, which can be determined in the course of a preferred embodiment of a method according to the present invention, and

Fig. 8.     schematically shows workflow for efficiency verification and calculation of efficiency and power empirically as well as using actual equations according to a preferred embodiment of a method according to the present invention.

Detailed description of the figures

Figs. 1 to 4 show diagrams for machines, e.g. main air and booster air compressors, of a process engineering plant, e.g. an air separation unit, which can be determined in the course of a preferred embodiment of a method according to the present invention.

Fig. 1 schematically shows a diagram of a flow m measured in [Nm$^3$/hr] vs. a pressure p measured in [bara]. Fig. 2 schematically shows a diagram of a flow m measured in [Nm$^3$/hr] vs. a power P measured in [kW]. Fig. 3 schematically shows a diagram of a percentage flow %m in [%] vs. a percentage head %dh in [%]. Fig. 4 schematically shows a diagram of a percentage flow %m in [%] vs. a percentage head %dh in [%].

Diagrams with input values of these kind can be determined in the course of the present method and can be used in order to improve the efficiency of the machines of and thus of the entire plant. Input values such as pressure, flow, inlet temperatures of air, surge lines of all machines and rotational speed of the turbines can be derived from a DCS system to calculate the efficiencies of each machine separately. Thereby the total power requirement of the plant is determined on stream. Information such as compressor performance curves, booster turbine performance curves, and specific speeds from machine manufacturers can be used for the calculation of machine efficiencies on stream.

The present invention provides a tool or program in the form of a machine module, to estimate the stream efficiency of machines, power, compressor performance curves and other important parameters. This machine module evaluates online machine efficiencies using digitalised performance curves and power estimation for boosters, compressors, turbines, pumps, etc. in the plant. Further, the machine module as disclosed in the application 19020654.0 can perform online rating using data from manufacturer and anti-surge controllers as well as predictive maintenance. Further, the machine module can exchange data with real time databases (RDB) or DCS systems for input and output values for performance monitoring and predictive maintenance.

Further, the machine module particularly performs one or several of the following functions: Compressor, booster turbine, cryogenic pump performance curves from manufacturers can be scanned and digitalised. Machine surge lines data from anti-surge controller for compressors can be evaluated. Isentropic efficiencies and polytropic efficiencies can be estimated online for given ambient conditions. Efficiencies are estimated using empirical as well as standard formulas. Empirical formulas are updated online from every well optimized case. Powers of machines are calculated online using empirical formulas and compressor performance curves, power and other parameters are also estimated. Operating point controllers can be used to precisely control compressor, booster and turbine flows to maintain them dynamically at a best point of operational efficiency. Also flows are recalculated directly from dp measurements to avoid any errors in flow measurements. Power, efficiencies, performance curves of compressors, turbines, boosters and pumps can be estimated online for life performance monitoring.

Also other critical indicators essential for machine health can be monitored. Critical instances and deviations are recorded. By means of help machine learning programs and artificial intelligence programs major shut down failures can be avoided.

Predictive maintenance of compressors, turbines, boosters, and pumps is performed. Vibrational problems can be reported using real time data such as number of incidences and duration of vibrations. Increase in intercooler approach in comparison with design values can be achieved or approach temperature is higher can be hihgher than the design. Database models can be created for ambient air temperatures, cooling water temperatures vs recorded intercooler approaches (rise in cooling water temperature at intercooler of each stage of the machine).Oil demister vacuum monitoring, oil temperature measurements, oil filter pressure drop evaluation can be performed. Leak detection by comparing results of flows from simulations and real time data can be performed. Also, pressure drop across the compressor seals can be monitored for leakage detection from oil into process side and vice versa. Parameter readings mentioned in mechanical running test record and initial run can be compared with current values to observe any large deviations, such as oil reservoir levels, oil cooler temperatures and vibrations, pressure drop across the seals, cooling water temperatures, intercooler temperatures, and all above mentioned parameters. Auto monitoring of all parameters can also be done in the machine module using artificial intelligence as mentioned in the application 19020654.0.

Of each and every stage bearing temperatures, vibrations can be observed. When large deviations are observed, instances and their durations can be recorded and operators can be informed about any preventive actions which can be taken. All critical parameters such as lube oil pressure, temperatures, oil filter pressure drops, bearing vibrations, temperatures, seal gas pressures, cooling water temperatures, interstage cooler outlet and inlet temperatures etc. are monitored continuously. Different alarms are analysed, pressure drop across the seals etc. The number of instances and duration of the incidences are recorded when alarms are triggered, and actual values are higher than the design values. This can be reported on a predictive maintenance window of each machine and preventive actions can be displayed.

In addition, online rating of machines, power and efficiency estimations using data based correlations, critical parameters are monitored for preventive and predictive maintenance as mentioned in the application 19020654.0.

Pump efficiencies can be estimated using digitalised curves from pumps. Performance can be monitored using machine efficiencies, power consumption other critical parameters. Pump performance can be monitored by analysing critical parameters on a continuous basis such as increase in power consumption or efficiency deterioration. Operating point controllers can be used for pumps which can adjust the pump head according to process requirements. Pressure differences across pumps can be monitored for cavitation protection. Suction pressure, discharge pressure, $P_{in}$, $P_{out}$, bearing temperature, voltage, frequency, vibration at different points, speed can be compared and analysed using machine learning data.

Cavitation detection and protection counter can be performed online along with performance curves. Loss of prime detection and protection timers can be monitored. Number of instances and their durations can be recorded to avoid any major damage to pumps. It can be also possible to give an automatic feedback for replacing some parts of pumps, seals or oil.

In the following, formulas and equations will be given to monitor compressor and booster turbines power and efficiencies online.

1) Isothermal efficiency of compressor

$$\eta iso = \left[ \left( \frac{P_2}{P_1} \right)^{\frac{k-1}{k}} - 1 \right] / \left( T2/T1 - 1 \right)$$

$\eta_{iso}$ = isentropic efficiency
$P_2$ = outlet pressure
$P_1$ = inlet pressure
K = isentropic constant
$T_2$ = outlet temperature of air
$T_1$ = Inlet temperature of air

2) Empirical or Data based Correlations for Compressor efficiency estimations

$$Neff = \alpha * \ln\ (Veff(m3/hr)\ /1000) + \beta$$

where $\alpha$ and $\beta$ are two fitting parameters.
3) Polytropic efficiency of compressors

$$\eta poly = \ln\left[ \left( \frac{P_2}{P_1} \right)^{\frac{k-1}{k}} \right] / \ln\left( T2/T1 \right)$$

where K = isentropic constant
P2 = discharge pressure bara
P1 = suction pressure bara
T2 = discharge temperature K
T1 = suction temperature K

4) Data based expression for the constant efficiency curves, for predicting efficiency

$$\hat{\eta} iso\left( q_c, \Pi, \vec{\alpha}_1 \right) = \alpha_1 + \alpha_2 q_c + \alpha_3 \Pi + \alpha_4 q_c^2 + \alpha_5 q_c \Pi + \alpha_6 \Pi^2$$

Where qc = compressor flow $m^3$/sec
$\Pi$ = pressure ratio over compressor = Pd /Ps
$\alpha$ = Compressor map coefficient
(References A. Cortinovis et.al Online Performance tracking and load sharing optimization for parallel operation
of gas compressors)

5) Isentropic head calculation

$$\Delta h = R \times T \times \frac{k}{k-1} \left[ \left( \frac{P_2}{P_1} \right)^{\frac{k-1}{k}} - 1 \right]$$

$\Delta$h = isentropic head J/kg
R = specific gas constant (J/kg K)
K = isentropic constant
P2 = outlet pressure bara
P1 = inlet pressure bara

6) Volumetric flow calculations

$$Q = C_{orifice} \sqrt{R \times T \times \frac{\Delta P}{P_1}}$$

Q = volumetric flow in Nm$^3$/h
R = specific gas constant for air (J/kg K)
T1 = inlet temperature, K
P1 = inlet pressure bara
$\Delta$P = differential pressure mbar
C$_{orifice}$ = orifice diameter from vendor

7) Isentropic power calculation for compressors

$$Power = M * (h_2 - h_1) = M * (h_{2isen} - h_1) / \eta_{iso}$$

M = Mass flow rate kg/ sec
h$_2$ = discharge enthalpy J/kg
h$_1$ = suction enthalpy J/kg
Power = kW
$\Delta$h$_{iso}$ = isentropic head J/kg
$\Delta$h$_{poly}$ = polytropic head J/kg

$$Power = (M * \Delta h_{iso)} / \eta_{isen}$$

$$Power = (M * \Delta h_{Poly)} / \eta_{poly}$$

8) Polytropic head is calculated by

$$\Delta hpoly = \left( R \times T1 \times \eta poly / (K-1) / K \right) \times \left[ \left( \frac{P_2}{P_1} \right)^{\frac{k-1}{k}(1/npc)} - 1 \right] / (T2/T1 - 1)$$

$$Head_{Isen} = \left( \frac{k}{k-1} \right) \left( \frac{Z_a RT_1}{MW} \right) \left[ \left( \frac{P_2}{P_1} \right)^{\left( \frac{k-1}{k} \right)} - 1 \right]$$

Z = compressibility factor
MW = gas molecular weight

$$Head_{Poly} = \left( \frac{n}{n-1} \right) \left( \frac{Z_a RT_1}{MW} \right) \left[ \left( \frac{P_2}{P_1} \right)^{\left( \frac{n-1}{n} \right)} - 1 \right]$$

Head$_{Poly}$ = Head polytropic
MW = gas molecular weight

$$n = \left[ 1 - \frac{\left( \dfrac{T_2}{T_1} \right)}{\left( \dfrac{P_2}{P_1} \right)} \right]^{-1}$$

n - Polytropic path coefficient

9) Isentropic power

$$Power = \left( \frac{k}{k-1} \right) \left( \frac{Z_a}{\eta_{Isen}} \right) (T_1)(q_s) \left( \frac{P_s}{T_s} \right) \left[ \left( \frac{P_2}{P_1} \right)^{\left( \frac{k-1}{k} \right)} - 1 \right]$$

10) Polytropic power

$$Power = \left( \frac{n}{n-1} \right) \left( \frac{Z_a}{\eta_{Poly}} \right) (T_1)(q_s) \left( \frac{P_s}{T_s} \right) \left[ \left( \frac{P_2}{P_1} \right)^{\left( \frac{n-1}{n} \right)} - 1 \right]$$

Power in KW

11) Empirical formulas for compressor power estimations:

$$P[kW] = \Phi \cdot \dot{V} \left[ Nm^3 / h \right] \cdot \log \left( \frac{p_{out}}{p_{in}} \right)$$

Φ = empirical constant
Pout = Discharge pressure bara
Pin = Inlet pressure bara

12) Enthalpy difference and cold production by turbine

$$\Delta H = Cp \times \Delta T$$

Cp = specific heat of gas
ΔH = enthalpy difference due to expansion

$$\text{Entropy Difference, } \Delta s = Cp \times \ln(T2/T1) - R \times \ln(P2/P1)$$

Δs = entropy difference
Cp = Specific heat
T1 = inlet temperature K
T2 = outlet temperature K
R = specific gas constant for air (J/kg K)
P1 = inlet pressure bar
P2 = outlet pressure bar.

13) Turbine efficiency calculation:

$$\eta_{turbine} = \Delta h_{actual} / \Delta h_{isentropic}$$

14) Booster efficiency calculation:

$$\eta_{Compressore} = \Delta h_{isentropic} / \Delta h_{actual}$$

15)

$$U = \pi * d * N / 60$$

N = speed, per sec
D = impeller diameter m
U = tip speed m/sec

16) $\Delta his$ = Specific enthalpy J/kg

$$C0 = \sqrt{2 \cdot \Delta his}$$

17) Dimensionless specific speed

$$Ns = (N * \sqrt{Q}) / \Delta his^{0.75}$$

Ns = Specific speed,
Q = Volumetric flow
$\Delta his$ = Isentropic enthalpy

Fig .5 schematically shows a diagram of the differential head of compressors $\Delta h$ vs. the flow Q of the compressors. The diagram represents a new modified version of a LASS Controller with constant efficiency curves and compressor operating point controller for simultaneously monitoring anti surge limits and efficiency of compressors for plant energy optimisation purposes.

501 represents an antisurge point controlled by LASS. 502 represents an operating point controlled by an operating controller for best efficiency. 503 represents lines of constant efficiency.

504 is a surge detection line, 505 a surge line, 506 a safe line, and 507 a control line. 508 is an unstable operating area and 509 a stable operating area. 510 refers to a compressor head limit and 511 to a pressure limit. Further, "SM" refers to a surge margin and "IGV" refers to an inlet gate vane.

The best efficiency operating point can be given to the process automation software, which then gives the set point to the operating point controller of the compressor or the set point can also be directly given to the flow controller.

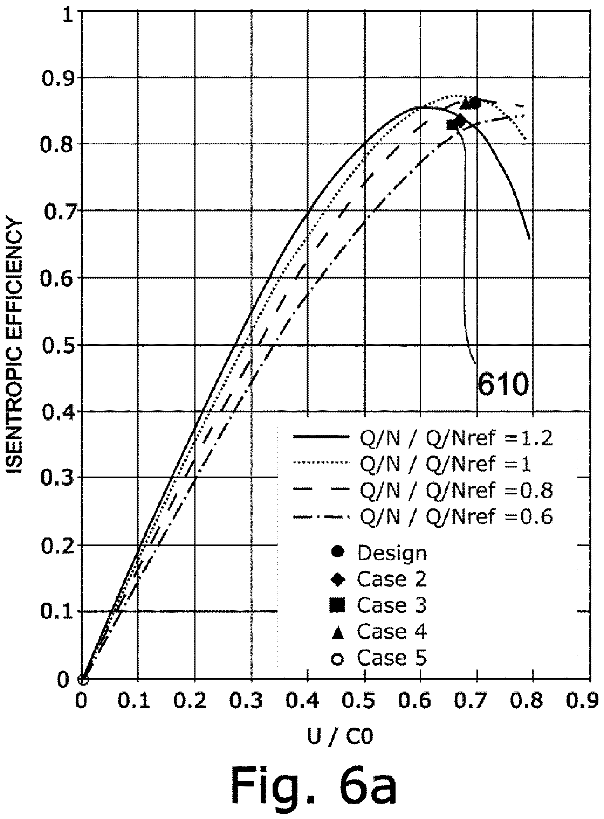

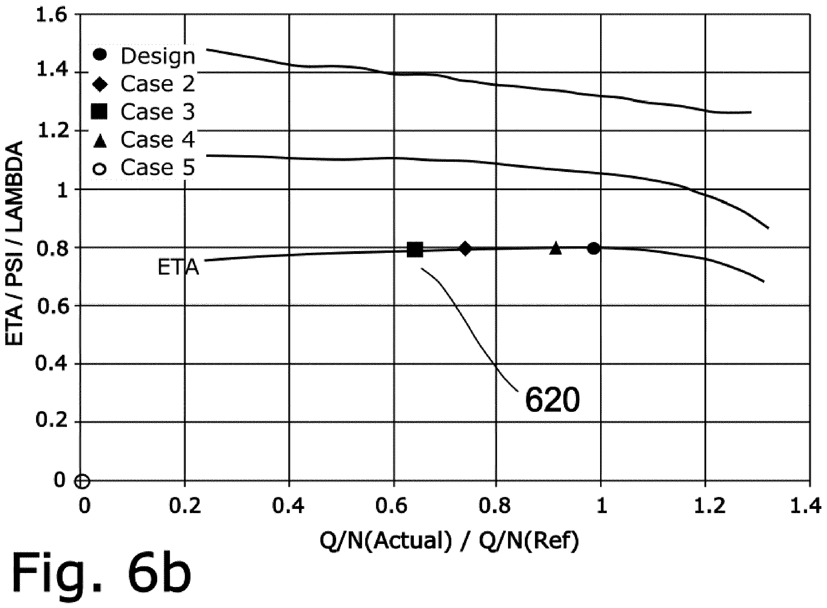

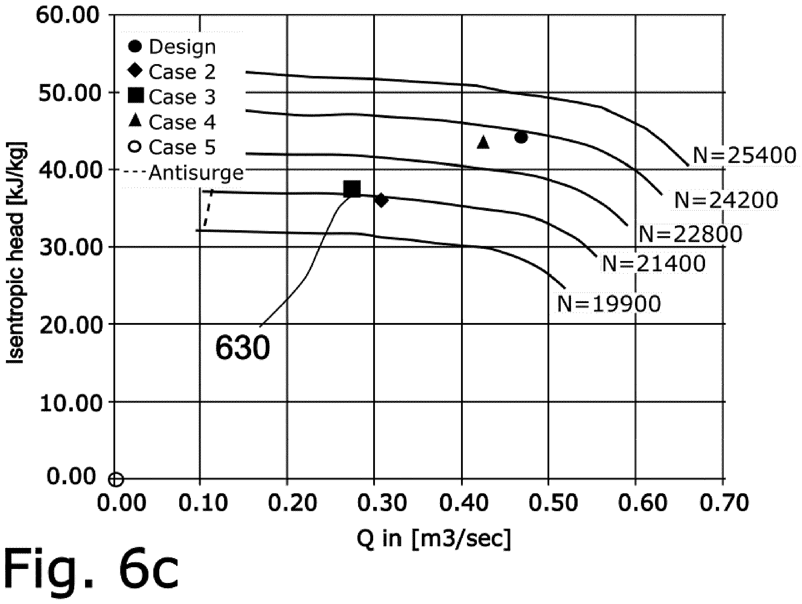

Fig. 6a, 6b and 6c schematically show diagrams for online monitoring of turbine and booster operating points and current efficiencies.

Fig. 6a schematically shows a diagram of turbine efficiency vs. (U/C0) of a turbine with N=23997[min$^{-1}$], P=886kW, ETA=86.3%, U/C0=0.70, and QN/QNref=0.97. Reference sign 610 represents the operation point of the turbine.

Fig. 6b and Fig. 6c schematically show diagrams of a booster with Pout=47.00bar, P=868kW, ETA=80.0%, QN/Qnref=0.99.

Fig. 6b schematically shows a diagram of the ETA/PSI/LAMBDA efficiency vs. booster flow, wherein 620 represents a current booster efficiency.

Fig. 6c schematically shows a diagram of the booster pressure head vs. booster flow, wherein 630 represents a current booster outlet pressure.

LAMBDA and PSI are turbine related constants, U/C0 is a spouting velocity, and ETA is the isentropic efficiency of the booster turbine.

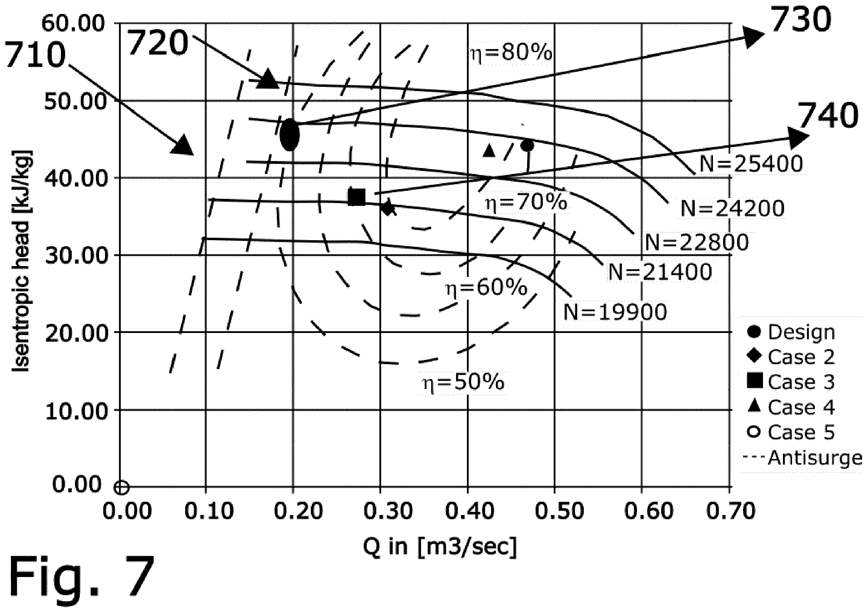

Fig. 7 schematically shows a diagram of an isentropic head vs. a booster flow of a booster analogously to Fig. 6c. Reference sign 710 refers to a surge line, 720 to a control line, 730 to a booster surge point controller and 740 to an operating point indicator/controller.

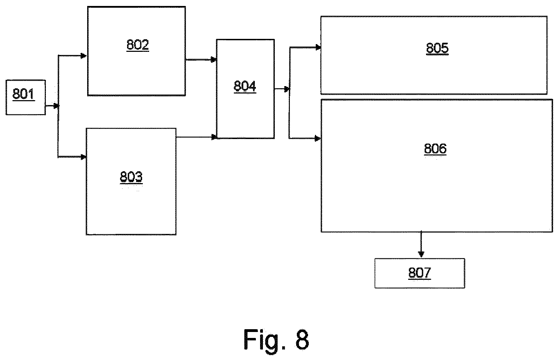

Fig. 8 schematically shows a workflow for efficiency verification and calculation of efficiency and power empirically as well as using actual equations. Particularly, Fig. 8 shows an efficiency and power calculation workflow using data from DCS and plant automation software.

Block 801 refers to data DCS. Block 802 refers to an efficiency calculation by empirical formula, machine learning, and an excel model based on machine data power models.

Block 803 refers to an efficiency calculation directly from measurements.

Block 804 refers to decision block which compares ηemp and ηcalc.

Block 805 refers to an efficiency calculation by empirical formula. If the display of efficiency ηemp is more than 10% than the calculated efficiency then efficiency is displayed with error.

Block 806 refers to a display efficiency. If efficiency < 1 or if an error between η̃emp and ηcalc is less than 10% then both efficiencies are displayed. Average efficiencies e.g. for an hour are displayed on the DCS in combination with global data points. The current operational point power consumption is displayed.

Block 807 refers to a data storage in a cloud or local.

Summarising the present invention relates to a method for operating and online performance rating of at least one machine such as compressors (all types of compressors), booster turbines, turbine with brake, generator turbine, booster turbine with oil brake, pumps (all types of pumps) of a process engineering plant, wherein current data characterising the at least one machine is determined, wherein the current data is evaluated, and wherein the at least one machine is operated in dependence of the evaluated current data.

Efficiency, power and machine performance curve estimations can be done in integration with LASS (Anti Surge System) controller or antisurge controller with or without "Smile Python" modules. Machine modules also evaluate all relevant critical parameters for accessing performance and safety of machines for predictive and preventive maintenance. Machine modules can also be programmed as an excel tool which uses data from DCS.

## Claims

1. A method for operating at least one machine of a process engineering plant,

    wherein current data characterising the at least one machine is determined,
    wherein the current data is evaluated, and
    wherein the at least one machine is operated in dependence of the evaluated current data.

2. The method according to claim 1, wherein evaluating the current data comprises determining an efficiency of the at least one machine.

3. The method according to claim 2, wherein evaluating the current data further comprises improving the efficiency of the at least one machine.

4. The method according to any one of the preceding claims, wherein evaluating the current data comprises determining an optimum operating point of the at least one machine.

5. The method according to any one of the preceding claims, wherein one or several of the following components is provided as the at least one machine:

    a compressor;
    a turbine;
    a booster;
    a pump;
    booster turbine;
    booster turbine with oil brake;
    generator turbine or oil brake turbine.

6. The method according to any one of the preceding claims, wherein the process engineering plant is an air separation unit and/or a natural gas plant and/or an ethylene plant and/or a hydrogen plant and/or an adsorption plant.

7. Computing unit which is, in particular programmatically, configured to perform a method according to any one of the preceding claims.

Fig. 1

Fig. 2

Fig.3

# Fig. 4

Fig. 5

Fig. 6a

Fig. 6b

Fig. 6c

EP 3 825 793 A1

Fig. 7

EP 3 825 793 A1

Fig. 8

Europäisches
Patentamt

European
Patent Office

Office européen
des brevets

# EUROPEAN SEARCH REPORT

**Application Number**

EP 20 02 0528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/142975 A1 (PICHE STEPHEN [US]) 21 June 2007 (2007-06-21) * paragraphs [0012] - [0013]; claims 1, 5; figures 1-3 * | 1-7 | INV. G05B19/042 G05B19/418 G06Q50/06 |
| X | US 9 957 843 B2 (GEN ELECTRIC [US]) 1 May 2018 (2018-05-01) * claim 1; figures 1-4 * | 1-7 | |
| X | US 2010/274745 A1 (SEO IN YONG [KR] ET AL) 28 October 2010 (2010-10-28) * paragraphs [0001] - [0006], [0021] - [0022]; claim 1; figures 1-2 * | 1-7 | |
| A | US 2014/026085 A1 (AMMINUDIN KAMARUL A [SA] ET AL) 23 January 2014 (2014-01-23) * claim 1 * | 1-7 | |

**TECHNICAL FIELDS SEARCHED (IPC)**

G05B
G06Q

The present search report has been drawn up for all claims

| Place of search | Date of completion of the search | Examiner |
|---|---|---|
| Munich | 22 March 2021 | Juillot, Olivier J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 02 0528

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2021

| Patent document cited in search report | Publication date | Patent family member(s) | Publication date |
|---|---|---|---|
| US 2007142975 A1 | 21-06-2007 | US 2007142975 A1<br>US 2009319092 A1<br>US 2011046752 A1<br>US 2012059525 A1<br>US 2013041483 A1<br>WO 2007075458 A2 | 21-06-2007<br>24-12-2009<br>24-02-2011<br>08-03-2012<br>14-02-2013<br>05-07-2007 |
| US 9957843 B2 | 01-05-2018 | NONE | |
| US 2010274745 A1 | 28-10-2010 | CN 101872181 A<br>JP 5431178 B2<br>JP 2010256328 A<br>KR 20100116502 A<br>US 2010274745 A1 | 27-10-2010<br>05-03-2014<br>11-11-2010<br>01-11-2010<br>28-10-2010 |
| US 2014026085 A1 | 23-01-2014 | EP 2875409 A2<br>US 2014026085 A1<br>WO 2014015096 A2 | 27-05-2015<br>23-01-2014<br>23-01-2014 |

EPO FORM P0459

For more details about this annex : see Official Journal of the European Patent Office, No. 12/82